# EUROPÄISCHE PATENTANMELDUNG

(11) **EP 1 048 677 A1**
(43) Veröffentlichungstag der Anmeldung: **02.11.2000**
(21) Anmeldenummer: 00104983.2
(22) Anmeldetag: 09.03.2000
(51) Int. Cl.: C08G 18/08, C08G 18/83

(54) **Mischungen zur Herstellung von Polyisocyanat-Polyadditionsprodukten**

(30) Priorität: 30.04.1999 DE 19919827
(71) Anmelder: BASF AKTIENGESELLSCHAFT, 67056 Ludwigshafen (DE)
(72) Erfinder: Arlt, Andreas, 49457 Drebber (DE); Rodewald, Dieter, Dr., 49152 Bad-Essen (DE); Tesch, Helmut, Dr., 67127 Rödersheim-Gronau (DE)

(57) **Zusammenfassung**

Mischungen zur Herstellung von Polyurethan-Polyadditionsprodukten, die Isocyanate oder gegenüber Isocyanaten reaktive Verbindungen sowie mindestens eine Verbindung (ii), die zur Reaktion mit tertiären Aminen befähigt ist, enthalten.

## Beschreibung

Die Erfindung bezieht sich auf Mischungen zur Herstellung von Polyisocyanat-Polyadditionsprodukten, die Isocyanate oder gegenüber Isocyanaten reaktive Verbindungen sowie mindestens eine Verbindung (ii), die zur Reaktion mit tertiären Aminen befähigt ist, enthalten, insbesondere Mischungen enthaltend
(i) mindestens ein Isocyanat sowie
(ii) mindestens eine Verbindung, die zur Reaktion mit tertiären Aminen befähigt ist.

Des weiteren betrifft die Erfindung Verfahren zur Herstellung von Polyisocyanat-Polyadditionsprodukten durch Umsetzung von Isocyanaten mit gegenüber Isocyanaten reaktiven Verbindungen in Gegenwart von gegebenenfalls Katalysatoren, Treibmitteln, Zusatzstoffen und/oder Hilfsmitteln, derart herstellbare Polyisocyanat-Polyadditionsprodukte und die Verwendung von (ii) in Polyisocyanat-Polyadditionsprodukten.

Die Herstellung von Polyisocyanat-Polyadditionsprodukten durch Umsetzung von Polyisocyanaten mit gegenüber Isocyanaten reaktiven Verbindungen in Anwesenheit von Katalysatoren, die die Reaktion der gegenüber Isocyanaten reaktiven Stoffe mit Isocyanaten beschleunigen und gegebenenfalls Treibmitteln, Zusatzstoffen, und/oder Hilfsmitteln ist allgemein bekannt.

Wie auch andere Kunststoffe sind Polyisocyanat-Polyadditionsprodukte Alterungsprozessen unterworfen, die im allgemeinen mit zunehmender Zeit zu einer Verschlechterung der Gebrauchseigenschaften führen. Wesentliche Alterungseinflüsse sind beispielsweise Hydrolyse, Photooxidation und Thermooxidation, die zu Bindungsbrüchen in den Polymerketten führen. Bei Polyisocyanat-Polyadditionsprodukten, beispielsweise Polyurethanen, im Folgenden auch als PUR bezeichnet, hat speziell die Einwirkung von Feuchtigkeit und noch verstärkt die Kombination von Feuchtigkeit und erhöhter Temperatur eine hydrolytische Spaltung der Urethan- und Harnstoffbindungen zur Folge.

Diese Spaltung äußert sich nicht nur in einer signifikanten Verschlechterung der Gebrauchseigenschaften, sondern führt auch zur Bildung von primären aromatischen Aminen wie beispielsweise Toluylendiamin (TDA) und Diaminodiphenylmethan (MDA) oder aliphatischen primären Aminen wie beispielsweise Hexamethylendiamin und Isophorondiamin.

Wie in Versuchen festgestellt wurde, wird die Aminbildung von einer Reihe von Parametern beeinflußt. Insbesondere hohe Temperaturen ab 80°C in Kombination mit hoher Luftfeuchtigkeit können zur hydrolytischen Spaltung der Urethan- und Harnstoffbindungen führen. Derartige Bedingungen sind für spezielle Anwendungsgebiete von PUR-Weichschaumstoffen von Bedeutung, beispielsweise bei Materialien, die einer Heißdampfdesinfektion (105°C, max. 10 min) oder -sterilisierung unterzogen oder mit Heißdampfreinigern gereinigt werden.

Ein weiterer Parameter, der die Bildung primärer Amine signifikant beeinflußt, ist die Art und Menge der verwendeten Katalysatoren. Wie in diversen Experimenten überraschenderweise nachgewiesen werden konnte, katalysieren die in Polyurethansystemen enthaltenen, für die Urethanisierungs- und Treibreaktion notwendigen Katalysatoren, in erheblichem Maße auch die hydrolytische Rückspaltungsreaktion. Die Anwesenheit von Katalysatoren ist somit eine ganz entscheidende Voraussetzung für die Hydrolyse der Urethan- und Harnstoffbindungen. Darüber hinaus konnte gezeigt werden, daß die Effizienz der Hydrolyse in hohem Maße von der Aktivität und der Art des Katalysators abhängig ist, sowie der Tatsache, ob der Katalysator im System verbleibt oder aus dem Material herausmigrieren kann. Insbesondere tertiäre Aminkatalysatoren mit reaktionsfähigen funktionellen Gruppen wie OH- und NH₂ beschleunigen die Aminbildung durch Absenkung der Aktivierungsenergie für die Spaltreaktion erheblich. Die funktionellen Gruppen bewirken den Einbau der Katalysatoren in das entstehende PUR-Netzwerk und die damit hergestellten Produkte weisen den Vorteil geringerer Geruchs- und Foggingproblematik auf, da die Katalysatoren nach der Fertigstellung des PUR-Produktes nicht durch Diffusion entweichen können. Dasselbe gilt für Rezepturen mit Polyolen, die mit primären oder sekundären Aminen als Startmoleküle hergestellt wurden und somit katalytisch aktiv im Schaum vorliegen. Derartige Polyole kommen in jüngster Zeit vermehrt zum Einsatz. Bei Rezepturen mit solchen Bestandteilen, die als Spezialanwendungen besonderen feucht-warmen Bedingungen ausgesetzt sind, kann die Bildung geringer Mengen primärer Amine als Spaltprodukte nicht ausgeschlossen werden. Bei Polyisocyanat-Polyadditionsprodukten mit Aminkatalysatoren, die keine einbaufähigen funktionellen Gruppen enthalten, entweichen diese dagegen in der Regel bereits kurze Zeit nach der Fertigstellung, bzw. bei der Alterung des Schaumstoffes. Bei solchen Schaumstoffen führen feucht-warme Bedingungen zu wesentlich geringeren Amingehalten.

Um speziell bei solchen PUR-Produkten, die feucht-warmen Bedingungen ausgesetzt sind, die hydrolytische Spaltung von Urethan- und Harnstoffbindungen und damit die Bildung primärer Amine zu vermindern, war es notwendig, Additive zu finden, die die verwendeten Aminkatalysatoren durch Deaktivierung in ihrer Effizienz zur Bindungsspaltung behindern. Die Additive sollten dabei die Schäumreaktion nicht wesentlich beeinflussen.

Als Verbindungen, die den Gehalt an primären aromatischen Aminen in Polyurethanweichschaumstoffen vermindern, werden gemäß US 4211847, GB 1565124 und DE-A 2946625 sterisch gehinderte cycloaliphatische Monoisocyanate und Monothioisocyante verwendet. Diese Isocyanate reagieren aufgrund ihrer sterischen Hinderung und der verglichen zu aromatischen Isocyanaten geringeren Reaktivität während der Schäumreaktion nur in geringem Umfang ab, so daß nach Beendigung der Schäumreaktion freies Isocyanat zur Reaktion mit gegebenenfalls vorhandenen aromatischen Aminen zur Verfügung steht. Nachteilig an diesen bekannten Lehren ist, daß die genannten Verbindungen relativ teuer und speziell die beiden zuletzt genannten Verbindungen trotz ihrer sterischen Hinderung zumindest teilweise auch an der Urethanisierungsreaktion beteiligt werden und nicht erst nach der Schäumreaktion mit gebildetem aromatischen Amin reagieren. Zudem neigen diese Isocyanate aufgrund ihres geringen Dampfdrucks dazu, aus dem fertigen Schaum herauszumigrieren und stellen somit eine weitere Gesundheitsgefahr durch Auftreten von freiem Isocyanat dar.

In der WO96/23826 wird die Darstellung von steifen thermoplastischen Polyurethanen mit verbesserter "melt strength" durch Zugabe eines deaktivierbaren Metall-Katalysators und der Zugabe eines Deaktivators für den deaktivierbaren Metall-Katalysator, um die Spaltung von Urethanbindungen zu unterdrücken, beschrieben. Eine Verbesserung der Hydrolysestabilität und damit der Alterung wird nicht beschrieben. Bei den genannten Katalysatoren handelt es sich um Zinnverbindungen, die über Deaktivatoren wie Säuren, speziell auf Phosphorbasis, antioxidante Metall-Deaktivatoren wie gehinderte phenolische Polyamine, phenolische Hydrazine oder phenolische Oxime deaktiviert werden. Über eine Deaktivierung von tertiären Aminkatalysatoren wird in diesem Dokument nicht berichtet. Der Deaktivator wird bevorzugt in gekapselter Form eingesetzt und muß in einem aufwendigen technischen Verfahren hergestellt werden. Wünschenswert wäre der einfache Zusatz von Additiven in die Isocyanat- oder Polyolkomponente.

DE-A 42 32 420 offenbart die Verwendung von α,β-ungesättigten Estercarboxylaten zur Herstellung von Polyurethanschaumstoffen, die eine verbesserte Stauchhärte und Reißdehnung aufweisen. Salze von α,β-ungesättigten Estercarboxylaten werden hierin als Katalysatoren für die NCO/Wasser-Reaktion verwendet. In einem Nebensatz wird beschrieben, daß die Verbindungen aufgrund des Vorliegens von olefinischen Doppelbindungen in Nachbarschaft zu den Carboxylatgruppen zur Addition von Aminogruppen, die während der langsamen Schaumalterung entstehen, befähigt sind. Nachteilig an diesen Verbindungen ist ihre katalytische Wirkung, die zu einer Beeinträchtigung der Schäumreaktion führt. Die katalytische Wirkung von Additiven zur Reduzierung der Amingehalte in fertigen PUR-Schäumen ist jedoch nicht erwünscht, da dies wie oben beschrieben zu einer weiteren und beschleunigten Bildung primärer aromatischer Amine führt.

In den überwiegenden bisher dargestellten Lehren greifen die bisher verwendeten Materialien direkt in den Reaktionsverlauf bei der Verarbeitung von Isocyanaten und gegenüber Isocyanaten reaktiven Verbindungen ein, verändern die Reaktivität dieser Komponenten zueinander und machen eine weitere Systemanpassung unumgänglich. Auch die in DE-A 23 50 684 beschriebenen Katalysator-Säure-Komplexe werden bei der Herstellung der Polyurethane zu den Ausgangskomponenten zugegeben.

Häufig werden zur Herstellung von Polyurethansystemen Katalysatoren, beispielsweise organische Amine, eingesetzt, die bei einer Herstellung von Polyurethanschaumstoffen bevorzugt sowohl die Treibreaktion, d.h. die Umsetzung der Isocyanatgruppen mit beispielsweise Wasser zur Bildung von Kohlendioxid, als auch die Vernetzungsreaktion zwischen alkoholischen Hydroxylgruppen und Isocyanaten zur Urethangruppe beschleunigen. Um das Fließvermögen und die Durchhärtung der Reaktionsmischungen zu verbessern, kann es insbesondere bei der Herstellung von geschäumten Polyurethanen vorteilhaft sein, die Amine blockiert durch Salzbildung mit einer organischen Säure, üblicherweise Ameisen-, Essig- oder Ethylhexansäure, einzusetzen. Während der Polyisocyanat-Polyadditionsreaktion unter Einwirkung der Reaktionswärme zerfallen die thermisch reversibel blockierten Katalysatoren, das katalytisch aktive Amin wird freigesetzt und die Vernetzungs- oder Schäumreaktion setzt erst nach ausreichender Start- und Steigzeit des Reaktionsgemisches verstärkt ein. Katalysatoren dieser Art werden in DE-A 28 12 256 beschrieben.

Nachteilig an diesem Einsatz von verzögert wirkenden Katalysatoren ist die Tatsache, daß diese Katalysatoren in einem äquimolaren Verhältnis von basischem Katalysator zu blockierender Säure eingesetzt werden und nach erfolgter Katalyse der Katalysator unblockiert in dem Polyisocyanat-Polyadditionsprodukt vorliegt. Auch ist anzumerken, daß die Katalysatoren meistens mit leichtflüchtigen Säuren blockiert werden und diese aufgrund der hohen Temperaturen während des Verarbeitungsprozesses aus dem System verdampfen und für eine Blockierung des Katalysators nicht mehr vorliegen. Darüber hinaus können in den überwiegenden Fällen nicht ausschließlich blockierte Katalysatoren eingesetzt werden, weil ansonsten die Reaktion zu langsam wird, so daß niemals die gesamte Menge des im System verbleibenden Katalysators blockiert wird und sehr große Anteile freien Katalysators die Urethanspaltung katalysieren können.

Aufgabe der vorliegenden Erfindung war es somit, eine Mischung zu entwickeln, die bei der Polyisocyanat-Polyadditionsreaktion zu Produkten mit einer verbesserten Stabilität gegen Alterungsprozesse, insbesondere gegen Hydrolyse, führt. Des weiteren sollte ein Stabilisator entwickelt werden, der es ermöglicht, die Hydrolyse bei Polyurethanen zurückzudrängen und damit auch zu verhindern, daß primäre Amine gebildet werden.

Diese Aufgabe konnte durch die eingangs beschriebenen Mischungen gelöst werden, die bevorzugt als Komponenten bei der Herstellung von Polyisocyanat-Polyadditionsprodukten, bevorzugt Polyurethanen, die gegebenenfalls Isocyanurat- und/oder Harnstoffstrukturen aufweisen können, besonders bevorzugt Polyurethanweichschaumstoffen, eingesetzt werden können.

Wie bereits oben erwähnt, konnte überraschend festgestellt werden, daß ein bei einer Herstellung von Polyisocyanat-Polyadditionsprodukten anwesender aminischer Katalysator, beispielsweise die an späterer Stelle beschriebenen tertiären Amin-Katalysatoren, nicht nur die Polyadditionsreaktion, d.h. die Bildung von Urethangruppen beschleunigt, sondern nach erfolgter Polyadditionsreaktion auch und verstärkt die Spaltung der Urethanbindungen katalysiert. Dies gilt insbesondere bei einer Lagerung der Polyisocyanat-Produkte unter feuchten und warmen Bedingungen und wird durch die Tatsache verstärkt, daß der Katalysator nach der Herstellung der Polyisocyanat-Polyadditionsprodukte nicht blockiert und damit aktiv vorliegt und die Rückspaltung katalysiert. Die Spaltung der Urethan- und/oder Harnstoffbindungen führt nicht nur zu einer Verschlechterung der Eigenschaften der Polyisocyanat-Polyadditionsprodukte, sondern kann auch zur Bildung von primären Aminen führen, die unerwünscht sind. Der Ansatz bestand daher darin, einen Deaktivator für die entsprechenden Katalysatoren zu suchen, um diese in ihrer Effizienz zur Bindungsrückspaltung signifikant zu behindern.

Überraschenderweise wurden als effektive Verbindungen für die Deaktivierung der Katalysatoren Quarternisierungsmittel gefunden. Unter dem Begriff "Quarternisierungsmittel" fallen in dieser Schrift Verbindungen, die zur Reaktion mit tertiären Aminen befähigt sind und zur Bildung von Stickstoff mit 4 kovalenten Bindungen zu Kohlenstoff führen. Durch den Zusatz von Quarternisierungsmitteln, beispielsweise üblichen Alkylierungsmitteln, wird das freie Elektronenpaar am N-Atom des tertiären Aminkatalysators blockiert. In der quarternisierten Form sind die Katalysatoren inaktiv und tragen nicht mehr zur Bindungsrückspaltung bei. Die Quarternisierung kann z.B durch Alkylierung erfolgen. Gängige Alkylierungsmittel sind beispielsweise Alkylhalogenide, Methyltosylate oder Methansulfonsäurealkylester. Andere Verbindungen führen nicht zu einer Alkylierung sondern allgemein gesprochen zu einer Quarternisierung der tertiären Amine. Der Zusatz von Benzylchlorid führt beispielsweise zu einer Anlagerung eines Benzylrestes an das tertiäre N-Atom. Als weiteres starkes Methylierungsreagenz wurde die Verbindung Triethyloxoniumtetrafluorborat gefunden.

Besonders wirksam erwiesen sich die zugesetzten Quarternisierungsmittel bei PUR-Rezepturen, die als Katalysatoren tertiäre Amine mit reaktionsfähigen funktionellen Gruppen wie OH- und NH₂ enthalten. Diese funktionellen Gruppen bewirken den Einbau der Katalysatoren in das entstehende PUR-Netzwerk und die damit hergestellten Produkte weisen den Vorteil geringerer Geruchs- und Foggingproblematik auf. Die Katalysatoren können nach der Fertigstellung des PUR-Produktes nicht durch Diffusion entweichen und führen damit nachteilig zu einer besonders effektiven Aktivierung der Rückspaltungsreaktion und der Bildung primärer Amine. Dasselbe gilt für Rezepturen mit Polyolen, die mit primären oder sekundären Aminen als Startmoleküle hergestellt wurden und somit katalytisch aktiv im Schaum vorliegen. Bei Rezepturen mit Aminkatalysatoren, die keine einbaufähigen funktionellen Gruppen enthalten, entweichen die Amine teilweise bereits kurze Zeit nach der Fertigstellung, bzw. bei der Alterung des Schaumes.

Neben der Verbesserung der Langzeitstabilität insbesondere höherer Hydrolysestabilität und damit der verminderten Bildung primärer aromatischer und aliphatischer Amine weisen die erfindungsgemäßen Quarternisierungsmittel (ii) eine Reihe weiterer Vorteile auf.

Einige der verwendeten erfindungsgemäßen Quarternisierungsmittel führen neben der Quarternisierung des tertiären Amins und damit verminderter Rückspaltung von Urethan- und/oder Harnstoffbindungen zusätzlich zur chemischen Reaktion mit freien Aminogruppen, die gegebenenfalls durch unerwünschte Spaltung von Urethan- und/oder Harnstoffbindungen entstanden sind. Dihalogenalkylaromaten wie Dibrom-o-xylol sind unter Halogenwasserstoffabspaltung z.B. zur Bindung einer primären Amingruppe befähigt.

Überraschenderweise wurde bei mit bromierten Alkylaromaten als Hydrolysestabilisatoren hergestellten Schaumstoffen zudem eine erhöhte Flammbeständigkeit festgestellt.

Ein weiterer Vorteil, der sich durch die Umsetzung der tertiären Amine mit Quarternisierungsmitteln ergibt, ist die Tatsache, daß die Diffusion der Aminkatalysatoren aus den PUR-Produkten vermindert wird und damit foggingärmere Fertigprodukte hergestellt werden können.

Die Verbindungen (ii) werden somit in Polyisocyanat-Polyadditionsprodukten zur Stabilisierung der Polyisocyanat-Polyadditionsprodukte, insbesondere Polyurethanen, gegen eine Spaltung der Urethan- und/oder Harnstoffbindungen und damit gegen die Bildung primärer Amine verwendet, beispielsweise durch Reaktion mit den Katalysatoren. Zudem kann (ii) in Polyisocyanat-Polyadditionsprodukten zur Reaktion mit Aminogruppen in den Polyisocyanat-Polyadditionsprodukten Verwendung finden.

Die Diffusion von Aminen aus den Polyisocyanat-Polyadditionsprodukten und die Rückspaltung der Urethan- und/oder Harnstoffbindungen beispielsweise durch in den Polyisocyanat-Polyadditionsprodukten vorhandene aminische Katalysatoren kann damit erfindungsgemäß vermindert werden.

Als Isocyanate (i) kommen beispielsweise nachfolgend beschriebene Verbindungen in Frage:

Als Isocyanate können die an sich bekannten aliphatischen, cycloaliphatischen, araliphatischen und vorzugsweise aromatischen organischen Isocyanate, bevorzugt mehrfunktionellen, besonders bevorzugt Diisocyanate, eingesetzt werden.

Im einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-diisocyanat-1,4, 2-Methyl-pentamethylen-diisocyanat-1,5, Tetramethylen-diisocyanat-1,4 und vorzugsweise Hexamethylen-diisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische, aromatische Di- und Polyisocyanate, wie z.B. 2,4- und 2,6-Toluylen-diisocyanat (TDI) und die entsprechenden Isomerengemische, 4,4'-, 2,4'- und 2,2'-Diphenylmethan-diisocyanat (MDI) und die entsprechenden Isomerengemische, Naphthalin-1,5-diisocyanat (NDI), Mischungen aus 4,4'- und 2,4'-Diphenylmethan-diisocyanaten, Mischungen aus NDI und 4,4'- und/oder 2,4'-Diphenylmethan-diisocyanaten, 3,3'-Dimethyl-4,4'-diisocyanatodiphenyl (TODI), Mischungen aus TODI und 4,4'- und/oder 2,4'-Diphenylmethan-diisocyanacen, Polyphenyl-polymethylen-polyisocyanate, Mischungen aus 4,4'-, 2,4'- und 2,2'-Diphenylmethan-diisocyanaten und Polyphenylpolymethylenpolyisocyanaten (Roh-MDI) und Mischungen aus Roh-MDI und Toluylen-diisocyanaten. Die organischen Di- und Polyisocyanate können einzeln oder in Form ihrer Mischungen eingesetzt werden.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret- Allophanat-, Carbodiimid-, Isocyanurat-, Uretdion- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.-%, vorzugsweise von 31 bis 21 Gew.-%, bezogen auf das Gesamtgewicht, modifiziertes 4,4'-Diphenylmethandiisocyanat, modifizierte 4,4'- und 2,4'-Diphenylmethan-diisocyanatmischungen, modifiziertes NDI, modifiziertes TODI, modifiziertes Roh-MDI und/oder 2,4- bzw. 2,6-Toluylen-diisocyanat, wobei als Di- bzw. Polyoxyalkylenglykole, die einzeln oder als Gemische eingesetzt werden können, beispielsweise genannt seien: Diethylen-,Dipropylenglykol,Polyoxyethylen-,Polyoxypropylen-tetrole. Geeignet sind auch NCO-Gruppen enthaltende Prepolymere mit NCO-Gehalten von 25 bis 3,5 Gew.-%, vorzugsweise von 21 bis 14 Gew.-%, bezogen auf das Gesamtgewicht, hergestellt aus beispielsweise Polyester- und/oder vorzugsweise Polyetherpolyolen und 4,4'-Diphenylmethan-diisocyanat, Mischungen aus 2,4'- und 4,4'-Diphenylmethan-diisocyanat, NDI, TODI, Mischungen aus NDI und Isomeren des MDI, 2,4- und/oder 2,6-Toluylen-diisocyanaten oder Roh-MDI. Bewährt haben sich ferner flüssige, Carbodiimidgruppen und/oder Isocyanuratringe enthaltende Polyisocyanate mit NCO-Gehalten von 33,6 bis 15, vorzugsweise 31 bis 21 Gew.-%, bezogen auf das Gesamtgewicht, z.B. auf Basis von 4,4'-, 2,4'- und/oder 2,2'-Diphenylmethan-diisocyanat, NDI, TODI und/oder 2,4- und/oder 2,6-Toluylen-diisocyanat.

Die modifizierten Polyisocyanate können miteinander oder mit unmodifizierten organischen Polyisocyanaten wie z.B. 2,4'-, 4,4'-Diphenyl-methan-diisocyanat, NDI, TODI, Roh-MDI, 2,4- und/oder 2,6-Toluylen-diisocyanat gegebenenfalls gemischt werden.

Bevorzugt kommen als Isocyanate in den erfindungsgemäßen Mischungen bzw. Verfahren 4,4'-, 2,4'- und/oder 2,2'-Diphenylmethandiisocyanat, 2,4- und/oder 2,6-Toluylendiisocyanat, NDI, Hexamethylendiisocyanat und/oder Isophorondiisocyanat zum Einsatz, wobei diese Isocyanate sowohl in beliebigen Mischungen als auch wie bereits beschrieben modifiziert eingesetzt werden können. Prinzipiell ist jedoch die Wirksamkeit der erindungsgemäßen Quarternisierungsmittel (ii) unabhängig vom eingesetzten Isocyanat.

Als (ii) können beispielsweise allgemein bekannte Verbindungen eingesetzt werden, die durch Reaktion mit einem tertiären Amin eine kovalente Bindung zwischen dem Stickstoff und einem Kohlenstoff erzeugen können, d.h. zur Quarternisierung von Stickstoff geeignet sind. Beispielsweise können als (ii) allgemein bekannte Quarternisierungsreagenzien eingesetzt werden.

Bevorzugt werden als (ii) (C₁-C₁₂)-Alkylhalogenide wie z.B. Methyljodid, 1-Propylbrmid, 2-Propylbromid, 1-Propylchlorid, 2-Propylchlorid, 1-Propyljodid, 2-Propyljodid, Allylbromid, Allyljodid, 1-Butylbromid, 2-Butylbromid, 1-Butylchlorid, 2-Butylchlorid, 1-Butyljodid, 2-Butyljodid, Isobutylbromid, Isobutylchlorid, Isobutyljodid, tert-Butylbromid, tert-Butyljodid, 1-Pentylbromid, 1-Pentylchhorid, 1-Pentyljodid, 1-Hexylbromid, 1-Hexylchlorid, 1-Hexyljodid, 1-Brom-heptan, 1-Chhlorheptan, 1-Jodheptan, 1-Bromoctan, 1-Chloroctan, 1-Jodoctan, 1-Bromdecan, 1-Chlordecan, 1-Joddecan, 1-Bromdodecan, 1-Chlordodecan, 1-Joddo-Toluol-2-sulfonsäuremethylester, Toluol-2-sulfonsäureethylester, Toluol-4-sulfonsäureethylester, Methansulfonsäurealkylester, wie z.B. Methansulfonsäuremethylester, Methansulfonsäureethylester, araliphatische Halogenkohlenwasserstoffe wie z.B. Benzylchlorid, 4-Methylbenzylchlorid, 2,4-Dimethylbenzylchlorid, 2,5-Dimethylbenzylchlorid, Benzylbromid, 2-Phenylethylbromid, 2-Phenylethylchlorid, halogenierte araliphatische Halogenkohlenwasserstoffe wie z.B. 2-Chlorbenzylchlorid, 4-Chlorbenzylchlorid 1,2-Bis-(brommethyl)-benzol, 1,3-Bis-(brommethyl)-benzol, 1,4-Bis-(brommethyl)-benzol eingesetzt. Ferner können Halogenketone wie z.B. Chloraceton, Halogenaldehyde wie z.B. α-Bromisobutyraldehyd und/oder tertiäre Oxoniumsalze wie z.B. Trimethyloxoniumtetrafluorborat oder Diphenyljodoniumchlorid eingesetzt werden.

Besonders bevorzugt werden als (ii) (C₁-C₁₂)-Alkylhalogenide, Alkyltosylate, Methansulfonsäure-alkylester, araliphatische Halogenkohlenwaserstoffe, tertiäre Oxoniumsalze und/oder Mischungen dieser Verbindungen eingesetzt, insbesondere Methyljodid, 1,2-Bis-(brommethyl)-benzol, Benzylchlorid, Toluol-4-sulfonsäuremethylester, Toluol-2-sulfonsäuremethylester, Trimethyloxoniumtetrafluorborat, Methansulfonsäuremethylester und/oder Mischungen der genannten Verbindungen.

Besonders bevorzugt sind im allgemeinen solche Verbindungen (ii), die sich gut in (i) lösen.

Die erfindungsgemäßen Mischungen enthalten (ii) bevorzugt in einer Menge von 0,01 bis 20 Gew.-%, besonders bevorzugt 1 bis 6 Gew.-%, jeweils bezogen auf das Gewicht der Mischung, bevorzugt bezogen auf die Summe aus (i) und (ii).

Die Verbindungen (ii) werden bevorzugt in den Isocyanaten (i) gelöst. Dies bringt den Vorteil mit sich, daß sie ihre Wirkung frühestens bei der Schäumreaktion entfalten und somit nicht zu einer wesentlichen Beeinträchtigung, z.B in Form von verlängerten Start- und Abbindezeiten führen. Ihre Wirkung tritt damit größtenteils erst nach Fertigstellung des PUR-Produktes ein. Werden die Quarternisierungsmittel über die A-(Polyol-)Komponente in das System eingebracht, kann bereits vor der Schäumreaktion eine chemische Reaktion mit den Aminkatalysatoren stattfinden. Die quarternisierten Amine wären damit für eine Katalyse der Treib- und Urethanisierungsreaktion nicht mehr aktiv und würden zu einer starken Beeinträchtigung der Schäumreaktion führen.

Zusätzlich zu (ii) können die Mischungen Treibmittel, Zusatzstoffe und/oder Hilfsmittel enthalten.

Die erfindungsgemäßen, bereits dargestellten Verbindungen (ii), bevorzugt die erfindungsgemäßen Mischungen, kann man bevorzugt zur Herstellung von Polyisocyanat-Polyadditionsprodukten nach allgemein bekannten Verfahren durch Umsetzung von Isocyanaten mit gegenüber Isocyanaten reaktiven Verbindungen in Gegenwart von gegebenenfalls Katalysatoren, Treibmitteln, Zusatzstoffen und/oder Hilfsmitteln einsetzen. Als Polyisocyanat-Polyadditionsprodukte können beispielsweise kompakte oder zellige, beispielsweise mikrozellige, weiche, halbharte oder harte Polyurethanschäume, thermoplastische Polyurethane, oder Polyurethanelastomere nach üblichen Verfahren unter Verwendung der erfindungsgemäßen Mischungen oder der Verbindungen (ii) hergestellt werden. Bevorzugt sind demnach Verfahren zur Herstellung von Polyisocyanat-Polyadditionsprodukten durch Umsetzung von Isocyanaten mit gegenüber Isocyanaten reaktiven Verbindungen in Gegenwart von gegebenenfalls Katalysatoren, Treibmitteln, Zusatzstoffen und/oder Hilfsmitteln, wobei man die Umsetzung in Gegenwart von mindestens einer Verbindung (ii), die zur Reaktion mit tertiären Aminen befähigt ist, durchführt.

Bevorzugt setzt man die erfindungsgemäßen Mischungen oder (ii) in Verfahren zur Herstellung von geschäumten Polyisocyanat-Polyadditionsprodukten, beispielsweise Hinterschäumungen von Instrumententafeln, Lenkrädern oder Schaltknäufen, insbesondere Polyurethanweichschaumstoffen, beispielsweise Krankenhausmatratzen, Teppichhinterschäumungen, Schuhsohlen und/oder Polsterungen für Möbel oder Autositze, durch Umsetzung von Isocyanaten mit gegenüber Isocyanaten reaktiven Verbindungen in Gegenwart von Katalysatoren, Treibmitteln und gegebenenfalls Zusatzstoffen und/oder Hilfsmitteln ein.

Als gegenüber Isocyanaten reaktive Verbindungen mit üblicherweise mindestens zwei reaktiven Wasserstoffatomen, üblicherweise Hydroxyl- und/oder Aminogruppen, werden zweckmäßigerweise solche mit einer Funktionalität von 2 bis 8, vorzugsweise 2 bis 6, und einem Molekulargewicht von üblicherweise 60 bis 10000, verwendet. Bewährt haben sich z.B. Polyether-polyamine und/oder vorzugsweise Polyole ausgewählt aus der Gruppe der Polyether-polyole, Polyester-polyole, Polythioether-polyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyester-polyole und/oder Polyether-polyole, die nach bekannten Verfahren hergestellt werden können.

Die Polyester-polyole besitzen vorzugsweise eine Funktionalität von 2 bis 4, insbesondere 2 bis 3, und ein Molekulargewicht von üblicherweise 500 bis 3000, vorzugsweise 1200 bis 3000 und insbesondere 1800 bis 2500.

Die Polyether-polyole, besitzen eine Funktionalität von vorzugsweise 2 bis 6 und üblicherweise Molekulargewichte von 500 bis 8000.

Als Polyether-polyole eignen sich beispielsweise auch polymermodifizierte Polyether-polyole, vorzugsweise Pfropf-polyether-polyole, insbesondere solche auf Styrol- und/oder Acrylnitrilbasis, die durch in situ Polymerisation von Acrylnitril, Styrol oder vorzugsweise Mischungen aus Styrol und Acrylnitril hergestellt werden können.

Die Polyether-polyole können ebenso wie die Polyester-polyole einzeln oder in Form von Mischungen verwendet werden. Ferner können sie mit den Pfropf-polyether-polyolen oder Polyester-polyolen sowie hydroxylgruppenhaltigen Polyesteramiden, Polyacetalen, Polycarbonaten und/oder Polyether-polyaminen gemischt werden.

Als Polyolkomponenten werden dabei für Polyurethanhartschaumstoffe, die gegebenenfalls Isocyanuratstrukturen aufweisen können, hochfunktionelle Polyole, insbesondere Polyetherpolyole auf Basis hochfunktioneller Alkohole, Zuckeralkohole und/oder Saccharide als Startermoleküle, für flexible Schäume 2- und/oder 3-funktionelle Polyether- und/oder Polyesterpolyole auf Basis Glyzerin und/oder Trimethylolpropan und/oder Glykolen als Startermoleküle bzw. zu veresternde Alkohole eingesetzt. Die Herstellung der Polyetherpolyole erfolgt dabei nach einer bekannten Technologie. Geeignete Alkylenoxide zur Herstellung der Polyole sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugt werden Alkylenoxide verwendet, die zu primären Hydroxylgruppen in dem Polyol führen. Besonders bevorzugt werden als Polyole solche eingesetzt, die zum Abschluß der Alkoxylierung mit Ethylenoxid alkoxyliert wurden und damit primäre Hydroxylgruppen aufweisen. Zur Herstellung von thermoplastischen Polyurethanen verwendet man bevorzugt Polyole mit einer Funktionalität von 2 bis 2,2 und keine Vernetzungsmittel.

Als gegenüber Isocyanaten reaktive Verbindungen können des weiteren Kettenverlängerungs- und/oder Vernetzungsmittel verwendet werden. Beispielsweise zur Modifizierung der mechanischen Eigenschaften der mit diesen Substanzen hergestellten Polyisocyanat-Polyadditionsprodukte, z.B. der Härte, kann sich der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel können Wasser, Diole und/oder Triole mit Molekulargewichten von 60 bis <500, vorzugsweise von 60 bis 300 verwendet werden. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und Diolen und/oder Triolen als Startermoleküle.

Sofern zur Herstellung der Polyisocyanat-Polyadditionsprodukte Kettenverlängerungsmittel, Vernetzungsmittel oder Mischungen davon Anwendung finden, kommen diese zweckmäßigerweise in einer Menge von 0 bis 20 Gew.-%, vorzugsweise von 2 bis 8 Gew.-%, bezogen auf das Gewicht der gegenüber den Isocyanaten reaktiven Verbindungen zum Einsatz, wobei thermoplastische Polyurethane bevorzugt ohne Vernetzungsmittel hergestellt werden.

Als Katalysatoren kommen allgemein übliche Verbindungen in Betracht, beispielsweise organische Amine, beispielsweise Triethylamin, Triethylendiamin, Tributylamin, Dimethylbenzylamin, N,N,N',N'-Tetramethylethylendiamin, N,N,N',N'-Tetramethyl-butandiamin, N,N,N',N'-Tetramethyl-hexan-1,6-diamin, Dimethylcyclohexylamin, Pentamethyldipropylentriamin, Pentamethyldiethylentriamin, 3-Methyl-6-dimethylamino-3-azapentol, Dimethylaminopropylamin, 1,3-Bisdimethylaminobutan, Bis-(2-dimethylaminoethyl)-ether, N-Ethylmorpholin, N-Methylmorpholin, N-Cyclohexylmorpholin, 2-Dimethylamino-ethoxy-ethanol, Dimethylethanolamin, Tetramethylhexamethylendiamin, Dimethylamino-N-methyl-ethanolamin, N-Methylimidazol, N-(3-Aminopropyl)imidazol, N-(3-Aminopropyl)-2-Methylimidazol, 1-(2-Hydroxyethyl)imidazol, N-Formyl-N,N'-dimethylbutylendiamin, N-Dimethylaminoethylmorpholin, 3,3'-Bis-dimethylamino-di-n-propylamin und/oder 2,2'-Dipiparazindiisopropylether, Dimethylpiparazin, N,N'-Bis-(3-aminopropyl)-ethylendiamin und/oder Tris-(N,N-dimethylaminopropyl)-s-hexahydrotriazin, oder Mischungen enthaltend mindestens zwei der genannten Amine, wobei auch höhermolekulare tertiäre Amine, wie sie beispielsweise in DE-A 28 12 256 beschrieben sind, möglich sind. Des weiteren können als Katalysatoren für diesen Zweck übliche organische Metallverbindungen eingesetzt werden, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat. Bevorzugt können tertiäre aliphatische und/oder cycloaliphatische Amine in den Mischungen enthalten sein, besonders bevorzugt Triethylendiamin.

Als Treibmittel können gegebenenfalls, bevorzugt zur Herstellung von geschäumten Polyurethanen, allgemein bekannte Treibmittel, wie z.B. Stoffe, die einen Siedepunkt unter Normaldruck im Bereich von -40°C bis 120°C besitzen, Gase und/oder feste Treibmittel und/oder Wasser in üblichen Mengen eingesetzt werden, beispielsweise Kohlendioxid, Alkane und oder Cycloalkane wie beispielsweise Isobutan, Propan, n- oder iso-Butan, n-Pentan und Cyclopentan, Ether wie beispielsweise Diethylether, Methylisobutylether und Dimethylether, Stickstoff, Sauerstoff, Helium, Argon, Lachgas, halogenierte Kohlenwasserstoffe und/oder teilhalogenierte Kohlenwasserstoffe wie beispielsweise Trifluormethan, Monochlortrifluorethan, Difluorethan, Pentafluorethan, Tetrafluorethan oder Mischungen, die mindestens zwei der beispielhaft genannten Treibmittel enthalten.

Als Hilfsmittel und/oder Zusatzstoffe seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen genannt.

Die erfindungsgemäßen Mischungen werden bevorzugt zur Herstellung der Polyisocyanat-Polyadditionsprodukte, beispielsweise kompakten oder zelligen, beispielsweise mikrozelligen, thermoplastischen oder vernetzten, harten, halbharten oder weichen, elastischen oder unelastischen Polyurethanen eingesetzt.

Die Ausgangsstoffe für die Herstellung der Polyisocyanat-Polyadditionsprodukte sind beispielhaft bereits beschrieben worden. Üblicherweise werden die organischen Polyisocyanate und die gegenüber Isocyanaten reaktiven Verbindungen mit einem Molekulargewicht von 60 bis 10000 g/mol in solchen Mengen zur Umsetzung gebracht, daß das Äquivalenzverhältnis von NCO-Gruppen der Polyisocyanate zur Summe der reaktiven Wasserstoffatome der gegenüber Isocyanaten reaktiven Verbindungen 0,5 bis 5 : 1 vorzugsweise 0,9 bis 3 : 1 und insbesondere 0,95 bis 2 : 1 beträgt.

Gegebenenfalls kann es von Vorteil sein, daß die Polyurethane zumindest teilweise Isocyanuratgruppen gebunden enthalten. In diesen Fällen kann ein Verhältnis von NCO-Gruppen der Polyisocyanate zur Summe der reaktiven Wasserstoffatome von 1,5 bis 60 : 1, vorzugsweise 1,5 bis 8 : 1 bevorzugt gewählt werden.

Die Polyisocyanat-Polyadditionsprodukte können beispielsweise nach dem one-shot Verfahren, oder dem bekannten Prepolymer-Verfahren hergestellt werden, beispielsweise mit Hilfe der Hochdruck- oder Niederdruck-Technik in offenen oder geschlossenen Formwerkzeugen, Reaktionsextrudern oder Bandanlagen.

Bevorzugt werden mit den erfindungsgemäßen Mischungen geschäumte Polyisocyanat-Polyadditionsprodukte, beispielsweise geschäumte Polyurethane- und/oder Polyisocyanurate hergestellt.

Als vorteilhaft hat es sich erwiesen, die Polyisocyanat-Polyadditionsprodukte nach dem Zweikomponentenverfahren herzustellen und die gegenüber Isocyanaten reaktiven Verbindungen und gegebenenfalls die Katalysatoren, Treibmittel und/oder Hilfs- und/oder Zusatzstoffe in der A-Komponente zu vereinigen und als B-Komponente die Isocyanate und Katalysatoren und/oder Treibmittel einzusetzen. Die erfindungsgemäßen Verbindungen (ii) werden erfindungsgemäß bevorzugt der B-Komponente zugegeben.

In dem erfindungsgemäßen Verfahren zur Herstellung der Polyisocyanat-Polyadditionsprodukte setzt man (ii) bevorzugt in einer Menge von 0,1 bis 20 Gew.-%, besonders bevorzugt 1 bis 6 Gew.-%, bezogen auf das Gewicht der Summe aus (ii) und der eingesetzten Isocyanate, ein.

Die erfindungsgemäß erhältlichen Polyisocyanat-Polyadditionsprodukte enthalten bevorzugt durch die Reaktion von (ii) mit primären, sekundären und/oder insbesondere tertiären Aminen Stickstoff, der über vier Bindungen an Kohlenstoff gebunden ist. Bevorzugt ist somit die Verwendung von Verbindungen, die zur Reaktion mit tertiären Aminen befähigt sind, in Polyisocyanat-Polyadditionsprodukten zur Stabilisierung der Polyisocyanat-Polyadditionsprodukte, insbesondere Polyurethanen, gegen eine Spaltung der Urethan- und/oder Harnstoffbindung und insbesondere gegen die Bildung primärer Amine bzw. die Verwendung von Verbindungen, die zur Reaktion mit tertiären Aminen befähigt sind, in Polyisocyanat-Polyadditionsprodukten zur Reaktion mit primären, sekundären und/oder tertiären Aminogruppen in den Polyisocyanat-Polyadditionsprodukten.

Die Erfindung soll anhand der folgenden Beispiele dargestellt werden.

Um Bedingungen, wie sie bei oben erwähnten Spezialanwendungen vorkommen können, zu simulieren, wurde mit Proben nachfolgend genannter Weichschaumstoffe eine Feuchtwärmealterung durchgeführt. Hierzu wurden jeweils Probewürfel der entsprechenden Schaumstoffe mit der Kantenlänge 3 cm bei 90°C und 90 % rel. Luftfeuchtigkeit für 72 Stunden im Klimaschrank gealtert. Unter diesen Bedingungen kann es zu einer hydrolytischen Spaltung von Urethan- und Harnstoffbindungen kommen. Dies führt nicht nur zu einer drastischen Verschlechterung der mechanischen Eigenschaften, sondern auch zur Bildung primärer aromatischer Amine.

Aus diesem Grund wurden bei den hergestellten Schaumstoffen sowohl im unbehandelten Zustand als auch nach Feucht-Wärmealterung neben dem Druckverformungsrest, der Rückprallelastizität und der Stauchhärte auch der Gehalt an extrahierbarem MDA oder TDA gemessen.

Die Extraktion der aromatischen Amine wurde mittels einer von Prof. Skarping, Universität Lund, entwickelten Methode durchgeführt. Hierzu wurde der Schaum mit 10 ml Essigsäure (w = 1 Gew.-%) 10 mal ausgequetscht. Die Essigsäure wurde bei zusammengedrückter Schaumprobe in einen 50-ml-Meßkolben überführt. Der Vorgang wurde zweimal wiederholt und der Meßkolben bis zur Meßmarke mit der Essigsäure aufgefüllt. Anschließend wurde der MDA/TDA-Gehalt der vereinigten Extrakte mittels Kapillarelektrophorese mit UV-Detektion bestimmt. Die in den Beispielen angegebenen MDA/TDA-Gehalte entsprechen den Absolutgehalten des gebildeten MDA/TDA im PUR-Schaumstoff.

### Beispiel 1

Herstellung eines Polyurethan-Weichschaumstoffes, nachfolgend bezeichnet als Vergleichssystem 1 durch Vermischen von 750 g der folgenden A-Komponente mit 354 g der folgenden B-Komponente (Index 90) und überführen des aufschäumenden Gemisches in eine auf 53°C temperierte Aluminiumform (40 x 40 x 10 cm), wobei sich die Komponenten folgendermaßen aufbauen:

### A-Komponente

97 Gew.-Teile eines Polyols mit der Hydroxylzahl (OHZ) 28 mg KOH/g, einer mittleren Funktionalität von 2,3 und einem EO/PO Verhältnis von 14/86

3 Gew.-Teile eines Polyols mit der OHZ 42 mg KOH/g, einer mittleren Funktionalität von 3 und einem PO/EO-Verhältnis von 30/70
3,31 Gew.-Teile Wasser
0,8Gew.-Teile Aminopropylimidazol
0,6Gew.-Teile Lupragen® N107, OHZ: 421 mg KOH/g (BASF Aktiengesellschaft)
0,5Gew.-Teile Tegostab B 8631(Goldschmidt)

### B-Komponente

Mischung aus einem Polymer-MDI mit einem Anteil von 50 % und einem difunktionellem MDI- Gemisch mit einem Anteil von 50 %.

Dieses System beinhaltet als einbaubare Katalysatoren Aminopropylimidazol und Lupragen® N 107 (BASF Aktiengesellschaft). Es wurde ausgewählt, um die besondere Wirksamkeit der zugesetzten Additive bei PUR-Rezepturen mit einbaufähigen Katalysatoren und katalytisch aktiven Spacerpolyolen zu verdeutlichen.

| | **4,4'-MDA [mg/kg Schaum]** | **2,4'-MDA [mg/kg Schaum]** | **DVR [%]** | **RPE [%]** | **Stauchhärte [kPa]** |
|---|---|---|---|---|---|
| **Vergleichssystem 1** **o.L.** | < 1 | < 1 | 5,3 | 67,4 | 5,5 |
| **Vergleichssystem 1** **m.L.** | 397 | 687 | 7,6 | 57,7 | 4,4 |

| | | | | | |
|---|---|---|---|---|---|
| o.L: ohne Feucht-Wärmelagerung | | | | | |
| m.L.: nach Feucht-Wärmelagerung | | | | | |

### Beispiel 2

Herstellung eines Polyurethan-Weichschaumstoffes in Analogie zu 1), nachfolgend bezeichnet als Testsystem 1, mit dem Unterschied, daß die Isocyanat-Komponente 5,6 Gew.-% Toluol-4-sulfonsäuremethylester in gelöster Form enthielt.

| | **4,4'-MDA [mg/kg Schaum]** | **2,4'-MDA [mg/kg Schaum]** | **DVR [%]** | **RPE [%]** | **Stauchhärte [kPa]** |
|---|---|---|---|---|---|
| **Testsystem 1** **o.L.** | < 1 | < 1 | 5,1 | 69,7 | 6,3 |
| **Testsystem 1** **m.L.** | 32 | 85 | 4,9 | 66,9 | 5,3 |

| | | | | | |
|---|---|---|---|---|---|
| o.L: ohne Feucht-Wärmelagerung | | | | | |
| m.L.: nach Feucht-Wärmelagerung | | | | | |

### Beispiel 3

Herstellung eines Polyurethan-Weichschaumstoffes in Analogie zu 1), nachfolgend bezeichnet als Testsystem 2, mit dem Unterschied, daß die Isocyanat-Komponente 5 Gew.-% Methyljodid in gelöster Form enthielt.

| | **4,4'-MDA [mg/kg Schaum]** | **2,4'-MDA [mg/kg Schaum]** | **DVR [%]** | **RPE [%]** | **Stauchhärte [kpa]** |
|---|---|---|---|---|---|
| **Testsystem 2** **o.L.** | < 1 | < 1 | 3,9 | 69,1 | 6,2 |
| **Testsystem 2** **m.L.** | 23 | 70 | 5,6 | 64,4 | 4,8 |

| | | | | | |
|---|---|---|---|---|---|
| o.L: ohne Feucht-Wärmelagerung | | | | | |
| m.L.: nach Feucht-Wärmelagerung | | | | | |

### Beispiel 4

Herstellung eines Polyurethan-Weichschaumstoffes in Analogie zu 1), nachfolgend bezeichnet als Testsystem 3, mit dem Unterschied, daß die Isocyanat-Komponente 2 Gew.-% 1,2-Bis-(brommethyl)-benzol in gelöster Form enthielt.

| | **4,4'-MDA [mg/kg Schaum]** | **2,4'-MDA [mg/kg Schaum]** | **DVR [%]** | **RPE [%]** | **Stauchhärte [kpa]** |
|---|---|---|---|---|---|
| **Testsystem 3** **o.L.** | < 1 | < 1 | 3,7 | 68,5 | 6,6 |
| **Testsystem 3** **m.L.** | 46 | 126 | 5,0 | 64,5 | 5,2 |

| | | | | | |
|---|---|---|---|---|---|
| o.L: ohne Feucht-Wärmelagerung | | | | | |
| m.L.: nach Feucht-Wärmelagerung | | | | | |

### Beispiel 5

Herstellung eines Polyurethan-Weichschaumstoffes in Analogie zu 1), nachfolgend bezeichnet als Testsystem 4, mit dem Unterschied, daß die Isocyanat-Komponente 5 Gew.-% Benzylchlorid in gelöster Form enthielt.

| | **4,4'-MDA [mg/kg Schaum]** | **2,4'-MDA [mg/kg Schaum]** | **DVR [%]** | **RPE [%]** | **Stauchhärte [kPa]** |
|---|---|---|---|---|---|
| **Testsystem 4** **o.L.** | < 1 | < 1 | 3,6 | 69,4 | 5,7 |
| **Testsystem 4** **m.L.** | 49 | 104 | 5,7 | 63,7 | 4,6 |

| | | | | | |
|---|---|---|---|---|---|
| o.L: ohne Feucht-Wärmelagerung | | | | | |
| m.L.: nach Feucht-Wärmelagerung | | | | | |

### Beispiel 6

Herstellung eines Polyurethan-Weichschaumstoffes in Analogie zu 1), nachfolgend bezeichnet als Testsystem 5, mit dem Unterschied, daß die Isocyanat-Komponente 3,8 Gew.-% Methansulfonsäuremethylester in gelöster Form enthielt.

| | **4,4'-MDA [mg/kg Schaum]** | **2,4'-MDA [mg/kg Schaum]** |
|---|---|---|
| **Testsystem 5** **o.L.** | < 1 | < 1 |
| **Testsystem 5** **m.L.** | 35 | 96 |

| | | |
|---|---|---|
| o.L: ohne Feucht-Wärmelagerung | | |
| m.L.: nach Feucht-Wärmelagerung | | |

### Beispiel 7

Herstellung eines Polyurethan-Weichschaumstoffes in Analogie zu 1), nachfolgend bezeichnet als Testsystem 6, mit dem Unterschied, daß die Polyolkomponente 1 Gew.-% Trimethyloxoniumtetrafluoroborat in gelöster Form enthielt.

| | **4,4'-MDA [mg/kg Schaum]** | **2,4'-MDA [mg/kg Schaum]** |
|---|---|---|
| **Testsystem 6** **o.L.** | < 1 | < 1 |
| **Testsystem 6** **m.L.** | 34 | 86 |

| | | |
|---|---|---|
| o.L: ohne Feucht-Wärmelagerung | | |
| m.L.: nach Feucht-Wärmelagerung | | |

### Beispiel 8

Herstellung eines Polyurethan-Weichschaumstoffes, nachfolgend bezeichnet als Vergleichssystem 2 durch Vermischen von 750 g der folgenden A-Komponente mit 275 g der folgenden B-Komponente (Index 115) und Überführen des aufschäumenden Gemisches in eine offene Form mit einem Volumen von 40 l, wobei sich die Komponenten folgendermaßen aufbauen:

### A-Komponente

100 Gew.-.Teile Lupranol® 2080 (BASF Aktiengesellschaft)
2,65 Gew.-Teile Wasser
0,25 Gew.-Teile Lupragen® N 101 (BASF Aktiengesellschaft)
0,04 Gew.-Teile Lupragen® N 206 (BASF Aktiengesellschaft)
0,20 Gew.-Teile Zinndioktoat
0,80 Gew.-Teile Silikonstabilisator BF 2370

### B-Komponente

Lupranat® T 80 (BASF Aktiengesellschaft)

| | **2,4-TDA [mg/kg Schaum]** | **2,6-TDA [mg/kg Schaum]** |
|---|---|---|
| **Vergleichssystem 2** **o.L.** | < 1 | < 1 |
| **Vergleichsystem 2** **m.L.** | 31 | 8 |

| | | |
|---|---|---|
| o.L: ohne Feucht-Wärmelagerung | | |
| m.L.: nach Feucht-Wärmelagerung | | |

### Beispiel 9

Herstellung eines Polyurethan-Weichschaumstoffes in Analogie zu 8), nachfolgend bezeichnet als Testsystem 7, mit dem Unterschied, daß die Isocyanat-Komponente 5,6 Gew.-% Toluol-4-sulfonsäuremethylester in gelöster Form enthielt.

| | **2,4-TDA [mg/kg Schaum]** | **2,6-TDA [mg/kg Schaum]** |
|---|---|---|
| **Testsystem 7** **o.L.** | < 1 | < 1 |
| **Testsystem 7** **m.L.** | 8 | < 1 |

| | | |
|---|---|---|
| o.L: ohne Feucht-Wärmelagerung | | |
| m.L.: nach Feucht-Wärmelagerung | | |

### Beispiel 10

Herstellung eines Polyurethan-Weichschaumstoffes in Analogie zu 8), nachfolgend bezeichnet als Testsystem 8 mit dem Unterschied, daß die Isocyanat-Komponente z 5 Gew.-% Methyljodid in gelöster Form enthielt.

| | **2,4-TDA [mg/kg Schaum]** | **2,6-TDA [mg/kg Schaum]** |
|---|---|---|
| **Testsystem 8** **o.L.** | < 1 | < 1 |
| **Testsystem 8** **m.L.** | 14 | < 1 |

| | | |
|---|---|---|
| o.L: ohne Feucht-Wärmelagerung | | |
| m.L.: nach Feucht-Wärmelagerung | | |

### Beispiel 11

Herstellung eines Polyurethan-Weichschaumstoffes in Analogie zu 8), nachfolgend bezeichnet als Testsystem 9, mit dem Unterschied, daß die Isocyanat-Komponente zusätzlich 2 Gew.-% 1,2-Bis-(brommethyl)-benzol in gelöster Form enthielt.

| | **2,4-TDA [mg/kg Schaum]** | **2,6-TDA [mg/kg Schaum]** |
|---|---|---|
| **Testsystem 9** **o.L.** | < 1 | < 1 |
| **Testsystem 9** **m.L.** | 5 | < 1 |

| | | |
|---|---|---|
| o.L: ohne Feucht-Wärmelagerung | | |
| m.L.: nach Feucht-Wärmelagerung | | |

Bei den in den Tabellen der Beispiele angegebenen Abkürzungen handelt es sich im folgenden um:
4,4'-MDA: 4,4'-Diaminodiphenylmethan
2,4'-MDA: 2,4'-Diaminodiphenylmethan
2,4-TDA: 2,4-Diaminotoluol
2,6-TDA: 2,6-Diaminotoluol
DVR: Druckverformungsrest, gemessen nach DIN 53572
RPE: Rückprallelastizität, gemessen nach DIN 53573
Stauchhärte: gemessen nach DIN 53577 bei 40 % Verformung des Formkörpers

### Diskussion der Ergebnisse

Wie die MDA- und TDA-Gehalte in den angegebenen Testsystemen zeigen, führt der Zusatz von Quarternisierungsmitteln zu deutlich reduzierten MDA- und TDA-Gehalten verglichen zu den beiden Vergleichssystemen ohne Zusatz von Quarternisierungsmitteln, indem die Quarternisierungsmittel zu einer Deaktivierung der vorhandenen tertiären Aminkatalyatoren beitragen. Da der katalytisch aktive Stickstoff durch Ausbildung einer neuen Bindung nunmehr über vier Bindungen an Kohlenstoff gebunden ist, ist seine Aktivität gegenüber der Spaltung von Urethan- und Harnstoffbindungen signifikant vermindert. Durch den Zusatz der erfindungsgemäßen Quarternisierungsmittel (ii) werden folglich deutlich weniger Urethan- und Harnstoffbindungen gespalten und somit auch weniger primäre aromatische Amine gebildet. Dies äußert sich nicht nur in wesentlich geringeren Mengen an extrahierbaren aromatischen Aminen, sondern auch in einem deutlich geringeren Verlust der mechanischen Eigenschaften der Schaumstoffe (Testsysteme) nach Feucht-Wärmelagerung. Wie die Tabellen weiter zeigen, ist in den Testsystemen verglichen zu den beiden Vergleichssystemen ein deutlich geringerer Abfall der Härte und der Rückprallelastizität nach der Feucht-Wärmealterung zu verzeichnen. Auch die Druckverformungsreste halten sich auf einem wesentlich niedrigeren Niveau. Die zugesetzten Quarternisierungsmittel (ii) eignen sich demnach in hervorragenderweise als Stabilisatoren gegen eine hydrolytische Spaltung von Urethan- und Harnstoffbindungen und damit gegen die Bildung primärer Amine als Spaltprodukte in Polyurethanprodukten. Ein weiterer Vorteil, der bei Betrachtung der Beispiele 1 bis 5 deutlich wird, ist die Verbesserung der Druckverformungsreste und der Rückprallelastizität bereits vor der Feucht-Wärmelagerung. Die verwendeten Quarternisierungsmittel eignen sich neben ihrer Funktion als Hydrolysestabilisatoren auch als Additive zur Herstellung von Polyurethanschaumstoffen mit verbessertem Druckverformungsrest (geringere DVR-Werte im fertigen Schaumstoff) und erhöhter Rückprallelastizität.

## Patentansprüche

1. Mischungen zur Herstellung von Polyurethan-Polyadditionsprodukten, die Isocyanate oder gegenüber Isocyanaten reaktive Verbindungen sowie mindestens eine Verbindung (ii), die zur Reaktion mit tertiären Aminen befähigt ist, enthalten.

2. Mischungen enthaltend
(i) Mindestens ein Isocyanat sowie
(ii)mindestens eine Verbindung (ii), die zur Reaktion mit tertiären Aminen befähigt ist.

3. Mischung nach Anspruch 2 enthaltend (ii) in einer Menge von 0,01 bis 20 Gew.-%, bezogen auf das Gewicht der Summe aus (i) und (ii).

4. Mischung nach Anspruch 1 oder 2 enthaltend als (ii) Quarternisierungsreagenzien.

5. Mischung nach Anspruch 1 oder 2, dadurch gekennzeichnet, daß man als (ii) (C₁-C₁₂)-Alkylhalogenide, Alkyltosylate, Methansulfonsäure-alkylester, araliphatische Halogenkohlenwaserstoffe, tertiäre Oxoniumsalze und/oder Mischungen dieser Verbindungen einsetzt.

6. Verfahren zur Herstellung von Polyisocyanat-Polyadditionsprodukten durch Umsetzung von (i) Isocyanaten mit gegenüber Isocyanaten reaktiven Verbindungen in Gegenwart von gegebenenfalls Katalysatoren, Treibmitteln, Zusatzstoffen und/oder Hilfsmitteln, dadurch gekennzeichnet, daß man die Umsetzung in Gegenwart von (ii) mindestens einer Verbindung, die zur Reaktion mit tertiären Aminen befähigt ist, durchführt.

7. Verfahren nach Anspruch 6, dadurch gekennzeichnet, daß man (ii) in einer Menge von 0,01 bis 20 Gew.-%, bezogen auf das Gewicht von (i) und (ii), einsetzt.

8. Verfahren nach Anspruch 6, dadurch gekennzeichnet, daß man als (ii) Quarternisierungssreagenzien einsetzt.

9. Verfahren nach Anspruch 6, dadurch gekennzeichnet, daß man als (ii) (C₁-C₁₂)-Alkylhalogenide, Alkyltosylate, Methansulfonsäure-alkylester, araliphatische Halogenkohlenwaserstoffe, tertiäre Oxoniumsalze und/oder Mischungen dieser Verbindungen einsetzt.

10. Verfahren nach Anspruch 6, dadurch gekennzeichnet, daß man eine Mischung gemäß Anspruch 1 oder 2 einsetzt.

11. Polyisocyanat-Polyadditionsprodukte erhältlich nach einem Verfahren gemäß Anspruch 6.

12. Polyisocyanat-Polyadditionsprodukte enthaltend Stickstoff, der über vier Bindungen an Kohlenstoff gebunden ist.

13. Verwendung von Verbindungen, die zur Reaktion mit tertiären Aminen befähigt sind, in Polyisocyanat-Polyadditionsprodukte zur Stabilisierung der Polyisocyanat-Polyadditionsprodukte, insbesondere Polyurethanen, gegen eine Spaltung der Urethan- und/oder Harnstoffbindung und insbesondere gegen die Bildung primärer Amine.

14. Verwendung von Verbindungen, die zur Reaktion mit tertiären Aminen befähigt sind, in Polyisocyanat-Polyadditionsprodukten zur Reaktion mit primären, sekundären und/oder tertiären Aminogruppen in den Polyisocyanat-Polyadditionsprodukten.
